# Europäisches Patentamt

# European Patent Office

# Office européen des brevets

(11) Veröffentlichungsnummer: **0 253 195**
**A1**

(12) **EUROPÄISCHE PATENTANMELDUNG**

(21) Anmeldenummer: 87109360.5

(22) Anmeldetag: 30.06.87

(51) Int. Cl.⁴: **A22C 11/12** , B65D 63/12

(30) Priorität: 09.07.86 DE 8618284 U

(43) Veröffentlichungstag der Anmeldung:
20.01.88 Patentblatt 88/03

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Jahn, Jakob
Froschkönigweg 3
D-6200 Wiesbaden(DE)
Erfinder: Uhlmann, Dieter
Elsa-Brandström-Strasse 59
D-6500 Mainz-Gonsenheim(DE)
Erfinder: Günther, Heinz
Kirchstrasse 90
D-6227 Oestrich-Winkel(DE)

(54) **Mit einer Abbindung versehene schlauchförmige Verpackungshülle.**

(57) Die schlauchförmige Verpackungshülle (8) ist an ihrem einen Ende in Falten gelegt und mit einer die Fältelung mehrfach umschlingenden Abbindung versehen, welche besonders gas-und flüssigkeitsdicht ist. Die Abbindung besteht aus einem den Hüllenumfang umschlingenden ersten Schnurstück (10) und einem sich daran anschließenden zweiten Schnurstück (11), welches das erste Schnurstück (10) überquert und den Hüllenumfang umschlingt, wobei sein Ende (5) unter die vom zweiten Schurstück (11) gebildete Umschlingung hindurchgeführt ist. Die beiden Enden (5,6) der Abbindung befinden sich dicht am Umfang der Verpackungshülle (8).

Beschrieben wird ferner ein Verfahren zur Herstellung einer Hülle mit dieser Abbindung.

Fig. 1

## Mit einer Abbindung versehene schlauchförmige Verpackungshülle

Die Erfindung bezieht sich auf eine schlauchförmige Verpackungshülle, insbesondere Wursthülle, welche an ihrem einen Ende in Falten gelegt und mit einer die Fältelung mehrfach umschlingenden Schnur abgebunden ist, und auf ein Verfahren zu ihrer Herstellung.

Es ist bekannt, schlauchförmige Verpackungshüllen, insbesondere Wursthüllenabschnitte, einseitig zu verschließen und in dieser Konfektionierung in den Handel zu bringen. Als Verschlußelement wird in der Praxis beispielsweise ein Metallclip verwendet, welcher zunächst in U-Form um das in Falten gelegte Hüllenende gelegt wird. Die beiden Enden des Metallteils werden dann um die Hüllenfalten gebogen, wobei das Schlauchhüllenende dicht zusammengepreßt wird. Durch den Clipverschluß kann der Schlauchhülleninhalt gegenüber der Außenluft konservenähnlich abgedichtet werden. Ein anderes Verschlußelement besteht aus einer verknoteten die Hüllenfalten mehrfach umschlingenden Schnur, welche mit einer Abbindeschlaufe versehen ist. Diese Schnurschlinge dient als Aufhänger für die fertiggestellte Wurst.

Es hat sich gezeigt, daß der durch den Clip gebildete Verschluß verschiedene Nachteile aufweist. So besteht die Gefahr, daß die Wursthülle bereits beim Anbringen des Clips beschädigt wird oder daß kein ausreichend dichter Verschluß gebildet wird, weil der Clip die Hülle nicht fest genug umschließt. Solche undichten Stellen sind von besonderem Nachteil, wenn eine Vielzahl von Schlauchhüllen, welche mit flüssigen Produkten gefüllt sind, in einem Karton verpackt werden. Tritt dann bei einer einzigen Schlauchhülle ein Teil der Flüssigkeit z.B. durch den Clip nach außen heraus, so wird der gesamte Inhalt des Kartons verunreinigt und unbrauchbar. Die bisher bekannten Abbindungen mit eingebundenem Faden für Schlaufen, sowie eine Verclippung, sind allerdings weniger geeignet, empfindlichen Schlauchhülleninhalt, insbesondere gegenüber Luftsauerstoff, konservenähnlich abzudichten.

Es ist somit Aufgabe der Erfindung, eine einseitig verschlossene schlauchförmige Verpackungshülle, insbesondere Wursthülle, anzugeben, deren Verschlußelement eine gas-und flüssigkeitsdichte Verpackungs-bzw. Wursthülle ergibt und welches im Vergleich zu den bisherigen Abbindungen und verwendeten Verclippungen wesentlich zuverlässiger ist. Es ist ferner Aufgabe der Erfindung, die bisherigen Verfahren zur Herstellung einer Abbindung zu vereinfachen und gleichzeitig die Qualität der Abbindung zu verbessern.

Diese Aufgabe wird gelöst durch die im Patentanspruch 1 angegebene Verpackungshülle. Die schlauchförmige Ver-packungshülle ist insbesondere eine Wursthülle in Form eines Abschnitts, die im noch ungefüllten Zustand nur einseitig mit der Abbindung verschlossen ist. Die Ver packungshülle besteht beispielsweise aus Papier, regenerierter Cellulose, faserverstärkter Cellulose oder Kunststoff, wie z.B. Polyester oder Polyamid. Sie ist an ihrem mit der Abbindung versehenen Ende in üblicher Weise in Falten gelegt.

Die Abbindung besteht aus Schnur, Bindfaden, Kordel oder dgl., beispielsweise aus Naturgarn, wie Hanfgarn, oder Kunststoffgarn, wie z.B. Polypropylengarn. Als besonders vorteilhaft hat sich Polyestergarn erwiesen, insbesondere in Kombination mit einer Verpackungshülle aus Polyester. So zeigt die Kombination aus einer Abbindung aus Polyethylenterephthalatgarn oder -faden und einem biaxial streckorientierten Polyethylenterephthalatschlauch den Vorteil, daß sie sich besonders zuverlässig verarbeiten läßt. Die Abbindung ist besonders haltbar, selbst beim Brühen oder Kochen der Wurst.

Anstelle der Begriffe "Faden", "Kordel", "Garn" oder dgl. wird im folgenden der Einfachheit halber der Begriff "Schnur" verwendet. Unter einer Schnur sind insbesondere solche Garne zu verstehen, die aus zwei bis acht, vorzugsweise drei bis fünf, miteinander verdrillten Fäden bestehen. Die Erfindung wendet sich somit ab von den Clipverschlüssen, welche bisher als konservenähnliche Abdichtungen verwendet wurden.

Die Abbindung besteht aus einer speziellen Knotenform, in welcher die Schnur den Hüllenumfang im Bereich der Falten am Ende der Verpackungshülle mehrfach umschlingt.

Zur Beschreibung des Verlaufs der Schnur im Knoten wird die Schnur in zwei Abschnitten betrachtet, im folgenden als erstes und zweites Schnurstück bezeichnet, welche zusammen integraler Bestandteil der Gesamtschnur sind. Beginnend von einem Ende der Gesamtschnur umschlingt das erste Schnurstück den Hüllenumfang bis es nach einer vollen Umschlingung in das zweite Schnurstück übergeht. Das zweite Schnurstück beginnt an der Überquerung des ersten Schnurstücks und umläuft dann in einer weiteren Umschlingung erneut den Hüllenumfang, wobei die beiden Schnurstücke möglichst eng aneinanderliegen. Wenn auch das zweite Schnurstück die Umschlingung des Hüllenumfangs vollständig ausgeführt hat, kreuzt es sich selbst, wobei das Ende des zweiten Schnurstücks unter das vorherige Teil des zweiten Schnurstücks hindurchgeführt wird. Das Ende des zweiten Schnurstücks ist zugleich das Ende der Gesamtschnur.

Die Abbindung besteht aus einer Verknotung, die leicht zu bilden ist und überraschenderweise eine mit schnurförmigen Abbindungen bisher nicht erreichte Dichtheit erreicht. Die spezielle Knotenform der Abbindung weist keine Schlaufe auf. Vielmehr sind die Enden der Abbindung relativ kurz und enden dicht an der Schlauchhülle, d.h., es sind keine größeren vom Knoten abstehenden Schnurteile vorhanden. Als weiterer Vorteil ergibt sich eine deutliche Kosteneinsparung gegenüber Clipverschlüssen.

Die obengenannte Aufgabe wird ferner gelöst durch das im Anspruch 5 genannte Verfahren. Zur Ausübung dieses Verfahrens ist beispielsweise eine modifizierte Kunstdarm-Abbindemaschine ZD der Firma VVB Nagema (Dresden) geeignet. Mit dieser Vorrichtung wurden bisher Abbindungen mit einer Aufhängeschlaufe hergestellt.

In dieser Vorrichtung werden die zugeschnittenen Wursthüllenabschnitte Plissierwalzen zugeführt, welche die Hüllenabschnitte an ihrem einen Ende in Falten legen (plissieren). Danach erreichen die plissierten Hüllenabschnitte einen periodisch umlaufenden Revolverkopf, welcher die Hüllenabschnitte auf einer kreisförmigen Bahn zunächst in eine Preßstation und anschließend in eine entsprechend umgebaute Knotenstation führt, wo der erfindungsgemäße Knoten gebildet wird. Der Knoten nach der Erfindung läßt sich beispielsweise so herstellen, daß die Schnur in vorzugsweise horizontaler Ebene in Form von zwei Schleifen, die zusammen eine liegende Acht bilden, auf einer Halterung abgelegt wird und anschließend die beiden Schleifen jeweils um 90 nach oben oder unten gebogen werden, so daß sie annähernd neben-oder übereinanderliegen. Die Schlauchhülle wird dann mit ihrem plissierten Ende durch die beiden Schleifen gesteckt. Durch festes Ziehen an den Enden der Schnur werden die beiden Schleifen verkleinert und umschlingen die Schlauchhülle, so daß ein sehr fester, dauerhafter Knoten entsteht. Die Enden der Schnur werden so abgeschnitten, daß sie nach dem Festziehen dicht an der Schlauchoberfläche enden. Hierzu wird das leicht gespannte Schnurende kurz hinter dem Knoten, beispielsweise mit einem Messer, abgeschnitten.

Das Abschneiden kann in der Knotenstation oder zu einem späteren Zeitpunkt des Verfahrensablaufs erfolgen. Nach Fertigstellung der Abbindung bringt der Revolverkopf den Wursthüllenabschnitt in eine Abgabestation, wo er beispielsweise auf einem Transportband abgelegt wird. Das Herstellungsverfahren vereinfacht sich wesentlich dadurch, daß die zum Zusammenknoten der Schnurenden bzw. zur Schlaufenbildung bisher erforderlichen Knüpfwerkzeuge entfallen.

Die Erfindung wird durch die Figuren 1 bis 8 näher erläutert.

Es zeigen:

Fig. 1 bis 4 die zur Herstellung der Abbindung vorgesehene Schnur in Form von zwei Schleifen, die zusammen eine liegende Acht bilden, in Draufsicht,

Fig. 5 die in der Fig. 1 dargestellte Schnur, wobei die beiden Schleifen um 90° aus der Zeichenebene nach unten gebogen sind,

Fig. 6 die in der Fig. 2 dargestellte Schnur, wobei die beiden Schleifen um 90° aus der Zeichenebene nach unten gebogen sind,

Fig. 7 die in der Fig. 6 dargestellte Schnur, wobei ein Wursthüllenabschnitt mit seinem plissierten Ende durch die Schleifen hindurchgesteckt ist,

Fig. 8 den in der Fig. 7 dargestellten Wursthüllenabschnitt, wobei die Abbindung fertiggestellt ist.

Die Bezugsziffern haben in den Figuren jeweils die gleiche Bedeutung.

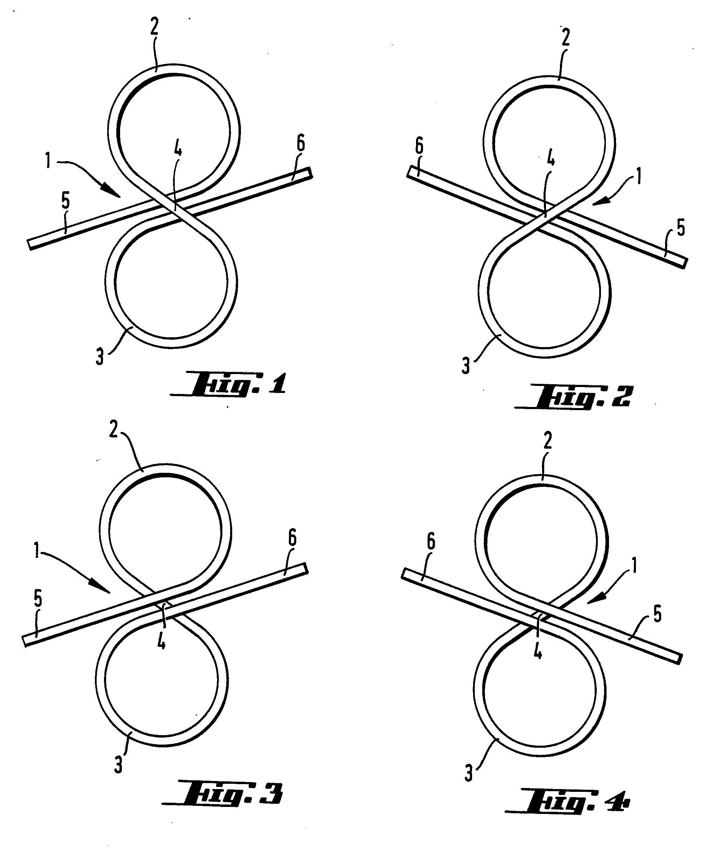

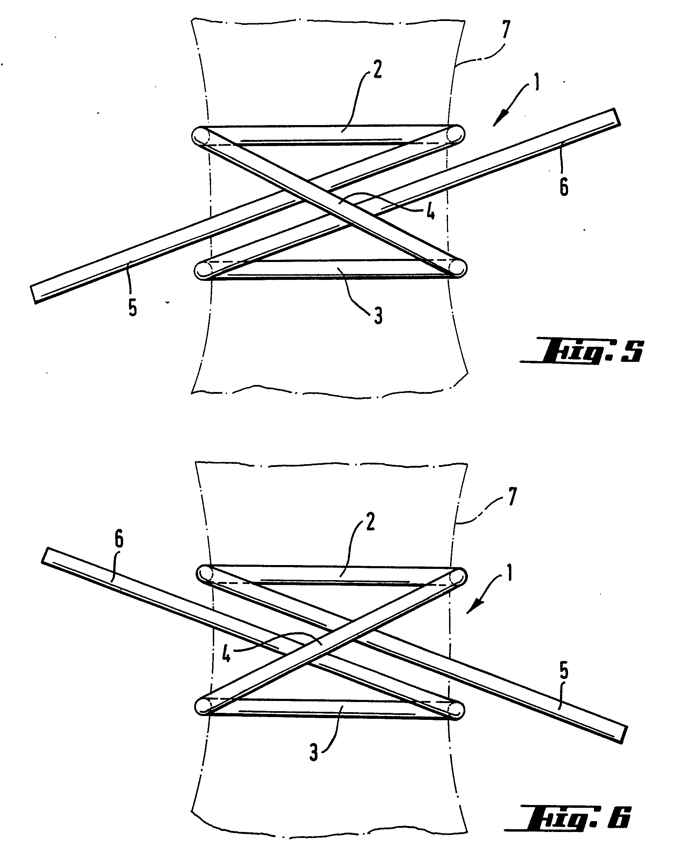

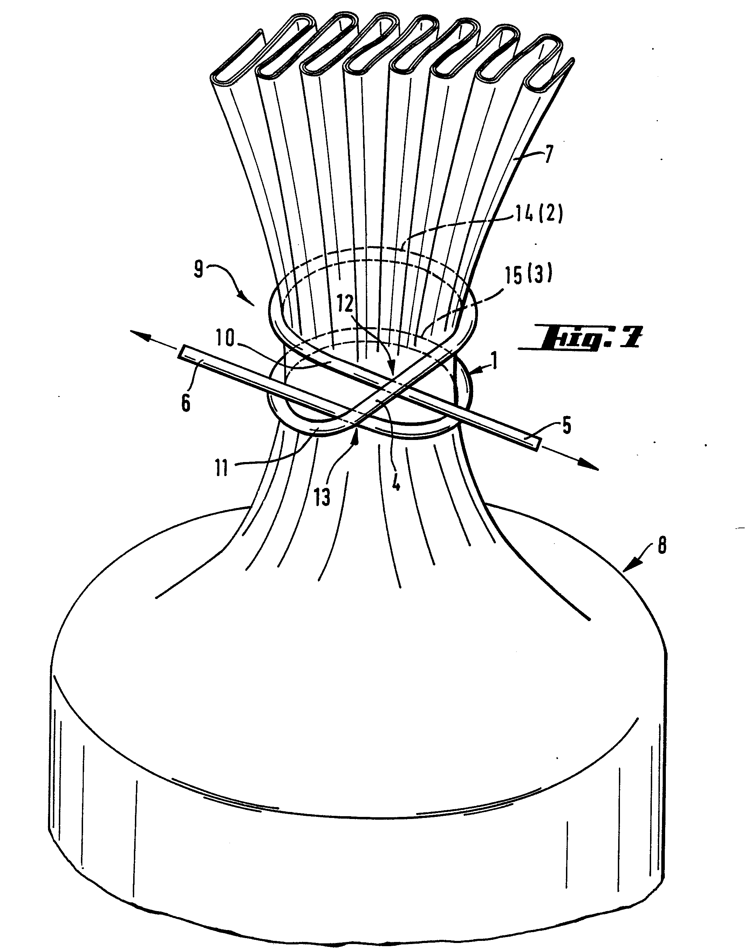

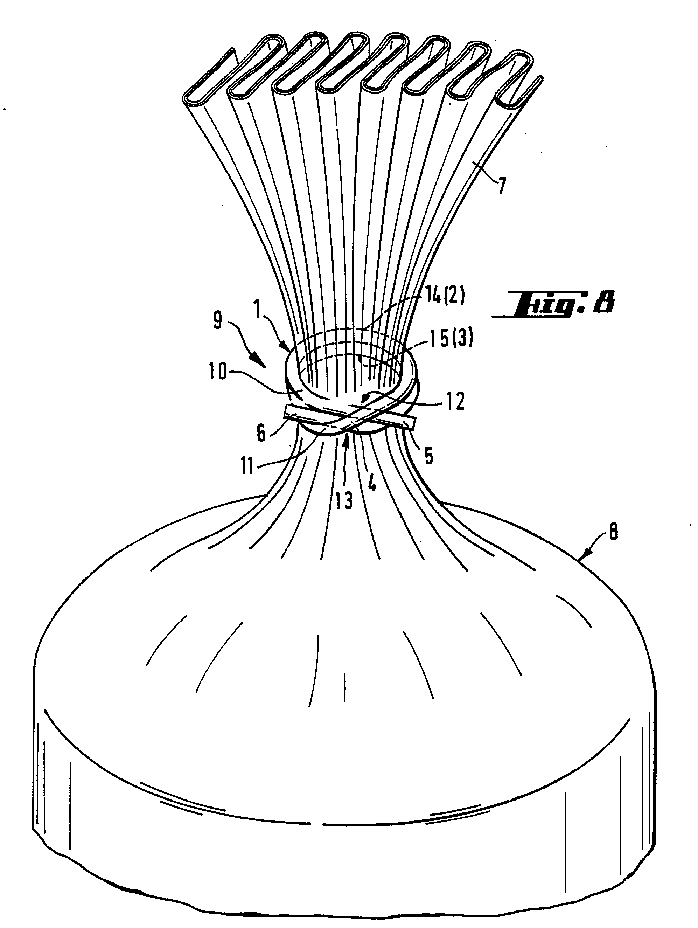

Die in den Figuren 1 bis 4 gezeigte Schnur 1 besteht aus zwei Schleifen 2 und 3, welche in einem Mittelteil 4 ineinander übergehen und sich bis zu den Schnurenden 5,6 erstrecken. In den Figuren 1 und 2 befinden sich die Schnurenden 5,6, in den Figuren 3,4 befindet sich das Mittelteil 4 unterhalb der Zeichenebene. Die Schleifen der Figur 1 bzw. Figur 3 verhalten sich zu den Ausführungsformen der Figur 2 bzw. 4 wie Bild und Spiegelbild. Zur Herstellung der Abbindung müssen die in den Figuren 1 bis 4 gezeigten Schleifen um 90° aus der Zeichenebene gebogen werden, und zwar die Schleifen der Figuren 1,2 - wie in den Figuren 5 und 6 gezeigt -nach unten und die Schleifen der Figuren 3,4 nach oben (nicht dargestellt). In den Figuren 5,6 befinden sich nur noch der Mittelteil 4 und die Schnurenden 5,6 in der Zeichenebene, die Schleifen 2,3 verlaufen nach unten.

In Figur 7 ist bereits die Form der späteren Abbindung erkennbar. Sie zeigt in vergrößertem Maßstab das gefältelte Ende 7 der Schlauchhülle 8 mit der Abbindung 9, kurz vor dem Zusammenziehen des Knotens. Das gefältelte Ende 7 wurde gebildet durch Plissieren der flachgelegten Schlauchhülle, so daß die beiden übereinander liegenden Schlauchhüllenflächen im gefältelten Ende eine Doppellage bilden. Die Abbindung 9 besteht aus dem den Umfang der Schlauchhülle 8 umschlingenden ersten Schnurstück 10 und dem daran anschließenden zweiten Schnurstück 11, welches bei 12 das erste Schnurstück 10 überquert und ebenfalls den Hüllenumfang umschlingt. Das Ende 5 des zweiten Schnurstücks 11 ist unter die vom zweiten Schnurstück 11 gebildete Umschlingung bei 13 hindurchgeführt. Zur Bildung des Knotens werden die beiden Schnurenden 5,6 in Richtung der Pfeile gezogen, wobei sich die parallelen Teile 14,15 der beiden Schnurstücke 10,11 einander nähern bis sie direkt nebeneinanderliegen. Die beiden Schnurenden 5,6 werden dann neben 12 bzw. 13 abgeschnitten.

Bei der in Figur 8 dargestellten Abbindung liegen die beiden Schnurstücke 10,11, insbesondere ihre parallelen Teile 14,15, eng aneinander.

**Ansprüche**

1. Schlauchförmige Verpackungshülle (8), insbesondere Wursthülle, welche an ihrem einen Ende in Falten gelegt und mit einer die Fältelung mehrfach umschlingenden Abbindung versehen ist, dadurch gekennzeichnet, daß die Abbindung aus einem den Hüllenumfang umschlingenden ersten Schnurstück (10) und einem sich daran anschließenden zweiten Schnurstück (11) besteht, welches das erste Schnurstück (10) überquert und den Hüllenumfang umschlingt, wobei sein Ende (5) unter die vom zweiten Schurstück (11) gebildete Umschlingung hindurchgeführt ist, und daß sich die beiden Enden (5,6) der Abbindung dicht am Umfang der Verpackungshülle (8) befinden.

2. Verpackungshülle nach Anspruch 1, dadurch gekennzeichnet, daß sie die Form eines Wursthüllenabschnitts aufweist, an dessen einem Ende sich die Abbindung befindet.

3. Verpackungshülle nach Anspruch 1 oder 2, dadurch gekennzeichnet, daß sie aus einem Schlauch aus gegebenenfalls faserverstärkter Cellulose oder Kunststoff, insbesondere auf der Basis von Polyester und/oder Polyamid besteht.

4. Verpackungshülle nach einem der Ansprüche 1 bis 3, dadurch gekennzeichnet, daß daß die Abbindung aus Kunststoff, insbesondere Polyester, besteht.

5. Verfahren zur Herstellung der Verpackungshülle nach einem der Ansprüche 1 bis 4, bei dem ihr eines Ende zunächst plissiert und das plissierte Ende mit der Abbindung versehen wird, dadurch gekennzeichnet, daß

1. die zur Herstellung der Abbindung vorgesehene Schnur in einer Ebene in Form von zwei Schnurschleifen abgelegt wird, welche zusammen eine liegende Acht bilden, wobei die beiden Schnurenden in der gleichen Ebene liegen,

2. die beiden Schnurschleifen aus der gemeinsamen Ebene in gleicher Richtung um 90° gebogen werden, so daß sie sich zumindest annähernd decken,

3. das plissierte Ende der Verpackungshülle in die beiden Schnurschleifen eingeführt wird,

4. durch Ziehen der Schnurenden der Knoten gebildet wird,

5. die beiden Schnurenden dicht am Umfang der Verpackungshülle abgeschnitten werden.

**Fig. 1**

**Fig. 2**

**Fig. 3**

**Fig. 4**

HOECHST AKTIENGESELLSCHAFT
86/K 032

Fig. 5

Fig. 6

HOECHST AKTIENGESELLSCHAFT
86/ K 032

*Fig. 7*

HOECHST AKTIENGESELLSCHAFT
86/K 032

*Fig. 8*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | FR-A-2 310 927 (NATURIN-WERK BECKER) <br> * Seite 4, letzte Abschnitt; Seite 5, Abschnitte 2,3 * | 1-4 | A 22 C 11/12 <br> B 65 D 63/12 |
| | --- | | |
| Y | FR-A-1 533 437 (SAVOIA) <br> * Seite 1, linke Spalte, Abschnitt 1; Seite 2, rechte Spalte, Abschnitte 2,3,4; Figuren 2,9 * | 1-4 | |
| | --- | | |
| A | FR-A-2 367 429 (S.A.T.E.M.) <br> * Figur 9 * | 1 | |
| | --- | | |
| A | FR-A-2 447 148 (PUJOL) <br> * Figur 9 * | 1 | |
| | --- | | RECHERCHIERTE SACHGEBIETE (Int. Cl.4) |
| A | FR-A- 738 159 (PLETSCHER) <br> * Figur 5 * | 1 | A 22 C <br> B 65 D . |
| | --- | | |
| A | DE-C- 712 012 (SCHIESS) <br> * Figur 1 * | 1 | |
| | --- | | |
| A | DE-C- 704 522 (BERNSTEIN) <br> * Insgesamt * | 5 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 25-09-1987 | DE LAMEILLIEURE D. |